# NEUE EUROPÄISCHE PATENTSCHRIFT

(11) **EP 1 252 769 B2**
(45) Veröffentlichungstag und Bekanntmachung des Hinweises auf die Entscheidung über den Einspruch: **20.12.2006**
(45) Hinweis auf die Patenterteilung: 21.05.2003
(21) Anmeldenummer: 00901025.7
(22) Anmeldetag: 01.02.2000
(51) Int. Cl.: H04N 7/173, G06F 3/00

(54) **SYSTEM UND VERFAHREN ZUR VERBREITUNG VON BILDOBJEKTEN**
SYSTEM AND METHOD FOR DIFFUSING IMAGE OBJECTS
SYSTEME ET PROCEDE POUR LA DIFFUSION D'OBJETS IMAGES

(43) Veröffentlichungstag der Anmeldung: 30.10.2002
(73) Patentinhaber: Swisscom Mobile AG, 3050 Bern (CH)
(72) Erfinder: RITTER, Rudolf, CH-3052 Zollikofen (CH); LAUPER, Eric, CH-3014 Bern (CH)
(74) Vertreter: Vogel, Dany
(86) Internationale Anmeldenummer: PCT/CH2000/000053
(87) Internationale Veröffentlichungsnummer: WO 2001/058160

(56) Entgegenhaltungen:
- EP-A- 0 816 984
- EP-A- 0 860 763
- EP-A1- 0 860 763
- EP-A2- 0 643 541
- WO-A-96/35288
- WO-A1-97/10558
- WO-A1-97/41654
- WO-A2-98/01750
- WO-A2-99/66746
- US-A- 5 467 104
- US-A- 5 758 257
- US-A- 5 886 683
- US-A- 5 893 091
- US-A- 6 009 410
- US-A- 6 011 537
- AVARO O ET AL: "MPEG-4 SYSTEMS: OVERVIEW" SIGNAL PROCESSING. IMAGE COMMUNICATION,ELSEVIER SCIENCE PUBLISHERS, AMSTERDAM,NL, Bd. 15, Januar 2000 (2000-01), Seiten 281-298, XP000934131 ISSN: 0923-5965
- ETSI TS 22 140 V3.0.0: UMTS; Service Aspects; Stage 1 Multimedia Messaging Service; Seiten 1-14
- International Conference on Intelligent User Interfaces; New Orleans, 9.-12. January 2000; Paul P. Maglio et al.: SUITOR: An Attentive Information System"

## Beschreibung

Die vorliegende Erfindung betrifft ein System und ein Verfahren zur Verbreitung von Bildobjekten. Insbesondere betrifft die vorliegende Erfindung ein System und ein Verfahren zur Verbreitung von Bildobjekten, die in einer mit einer Medienzentrale verbundenen Bildobjektdatenbank gespeichert sind, wobei den Bildobjekten in der Bildobjektdatenbankjeweils Bildobjektinformationen zugeordnet sind, wobei die Bildobjekte von der Medienzentrale über ein Kommunikationsnetz an ein oder mehrere mit diesem Kommunikationsnetz verbindbare Kommunikationsendgeräte übertragen werden, und wobei die Bildobjekte einem Benutzer des Kommunikationsendgeräts jeweils mittels einer Anzeigeeinheit des Kommunikationsendgeräts sichtbar gemacht werden.

Verfahren und Systeme, in denen zentral gespeicherte und mit zugeordneten Objektinformationen versehen Bildobjekte über ein Kommunikationsnetz an Kommunikationsendgeräte übermittelt und den Benutzern dieser Kommunikationsendgeräte jeweils mittels einer Anzeigeeinheit der Kommunikationsendgeräte sichtbar gemacht werden, sind bekannt. Als Bildobjekte werdeh im folgenden Text Datenfiles bezeichnet, die einen Bildinhalt umfassen, der vorzugsweise gemäss einem geeigneten Medien- und/oder Bilddatenstandard aufgebaut ist und der einem Benutzer durch geeignete Mittel, beispielsweise software- oder hardwäremässig ausgeführte Funktionen, insbesondere De-/Kompressions- und Wiedergabefunktionen, auf einer Anzeigeeinheit sichtbar gemacht werden kann. Der Bildinhalt dieser Bildobjekte betrifft beispielsweise unbewegte Bilder, zum Beispiel digitalisierte Photos, Grafiken und/oder Texte, er kann aber auch bewegte Bilder, beispielsweise Videosequenzen, betreffen. Zum Beispiel werden solche Bildobjekte von Web-Servern über das Internet an Kommunikationsendgeräte; wie beispielsweise Personal-Computer, übertragen und dort dem betreffenden Benutzer durch eine Anzeigeeinheit, beispielsweise ein Bildschirm, sichtbar gemacht. In solchen bekannten Systemen und Verfahren werden Bildobjekte allenfalls in Abhängigkeit davon, wie der Benutzer durch verschiedene beim Web-Serververfügbare Seiten navigiert, das heisst welche Navigationsbefehle und/oder Suchbefehle und Suchparameter der Benutzer eingibt, an das Kommunikationsendgerät des Benutzers übermittelt, ohne dass dabei durch den Web-Server einzelne Bildobjekte benutzerspezifisch gewählt und an den Benutzer übermittelt werden.

In der Patentschrift US 5758257 werden ein System und Verfahren beschrieben um die Verbreitung von und den Zugriff auf Videoprogramme basierend auf Benutzerprofilen zeitlich zu organisieren (schedule). Gemäss der Lehre von US 5758257 werden für Benutzer von Fernsehkabelnetzen jeweils in einer mit dem Fernsehgerät verbundenen Set-Top-Box basierend auf Sehgewohnheiten des Benutzers Benutzerprofile bestimmt und in der Set-Top-Box gespeichert. Basierend auf diesen Benutzerprofilen werden in den Set-Top-Boxen jeweils aus den Videoprogrammen der regulären, über das Fernsehkabelnetz empfangenen Fernsehkanäle virtuelle Kanäle generiert, deren Inhalt möglichst den Interessen des betreffenden Benutzers entspricht. Gemäss US 5758257 können in einer Set-Top-Box auch mehrere Benutzerprofile gespeichert werden, denen jeweils unterschiedliche Benutzeridentifizierungen zugeordnet sind, so dass von den betreffenden Benutzern jeweils individuelle Benutzerprofile für die Generierung der virtuellen Kanäle aktiviert werden können. Gemäss US 5758257 können von den Set-Top-Boxen Benutzerprofilinformationen über einen Rückkanal, beispielsweise ein Telefonnetz, an das Kopfende des Fernsehkabelnetzes übermittelt werden, wo darauf basierend ein Gesamtbenutzerprofil bestimmt wird, das die Sehgewohnheiten sämtlicher Benutzer zusammenfasst. Basierend auf diesem Gesamtbenutzerprofil wird gemäss der Lehre von US 5758257 im Kopfende laufend die zeitliche Planung von über das Fernsehkabelnetz zu verbreitenden Videoprogrammen ermöglicht. US 6 009 410 beschreibt ein System und Verfahren nach dem Oberbegriff des unabhängigen Ansprüche Paul P. Maglio et al. beschreiben in "SUITOR: An Attentive Information System", Proceedings of the 5^{th} International Conference on Intelligent User Interfaces, 9-12. Januar, 2000, ein System zur Benutzerprofilerstellung aus Schlüsselwörtern von Texten, die vom Benutzertatsächlich gelesen werden, wobei diese Texte mittels Blickrichtungsbestimmung ermittelt werden.

Es ist eine Aufgabe dieser Erfindung, ein neues und besseres System und ein neues und besseres Verfahren zur Verbreitung von Bildobjekten vorzuschlagen, welche insbesondere ermöglichen, dass Bildobjekte benutzerspezifisch gewählt und an das Kommunikationsendgerät eines betreffenden Benutzers übermittelt werden, ohne dass der betreffende Benutzer für diese benutzerspezifische Wahl Befehle und/oder Daten eingeben muss.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung insbesondere dadurch erreicht, dass in einem System zur Verbreitung von Bildobjekten, umfassend ein Kommunikationsnetz, mindestens eine mit diesem Kommunikationsnetz verbundene Medienzentrale, eine mit der Medienzentrale verbundene Bildobjektdatenbank, in welcher Bildobjektdatenbank die Bildobjekte und diesen Bildobjekten zugeordnete Bildobjektinformationen gespeichert sind, und ein oder mehrere mit diesem Kommunikationsnetz verbindbare Kommunikationsendgeräte, die jeweils über eine Anzeigeeinheit verfügen, mittels welcher Anzeigeeinheit die Bildobjekte einem Benutzer eines der Kommunikationsendgeräte sichtbar gemacht werden, durch die Medienzentrale Benutzerkenndaten entgegengenommen werden, die jeweils von einem der Kommunikationsendgeräte über das Kommunikationsnetz an die Medienzentrale übertragen werden, dass durch die Medienzentrale aus einer mit der Medienzentrale verbundenen Benutzerinteressendatenbank, in welcher Benutzerinteressenprofile und diesen Benutzerinteressenprofilen zugeordnete Benutzerkenndaten gespeichert sind, das den entgegengenommenen Benutzerkenndaten zugeordnete Benutzerinteressenprofil bestimmt wird, dass durch die Medienzentrale aus der Bildobjektdatenbank Bildobjekte bestimmt werden, denen Bildobjektinformationen zugeordnet sind, die mindestens eine Übereinstimmung, das heisst mindestens eine Korrelation gemäss einem vordefinierten Korrelationswert, mit Informationen des bestimmten Benutzerinteressenprofils aufweisen, und dass durch die Medienzentrale mindestens eines der bestimmten Bildobjekte über das Kommunikationsnetz an das betreffende Kommunikationsendgerät übermittelt wird, von dem die entgegengenommenen Benutzerkenndaten übertragen wurden. Die Entgegennahme von Benutzerkenndaten von einem Kommunikationsendgerät eines Benutzers, die Bestimmung eines diesen Benutzerkenndaten zugeordneten Benutzerinteressenprofils und die Wahl und Übermittlung von Bildobjekten auf Grund des bestimmten Benutzerinteressenprofils und auf Grund der den Bildobjekten zugeordneten Bildobjektinformationen durch die Medienzentrale hat den Vorteil, dass Bildobjekte durch die Medienzentrale benutzerspezifisch gewählt und an das Kommunikationsendgerät des Benutzers übermittelt werden können, ohne dass dazu von diesem Benutzer Befehle und/oder Daten eingegeben werden müssen.

Erfindungsgemäss wird die aktuelle Blickrichtung von mindestens einem Auge eines Benutzers jeweils durch ein Blickrichtungsbestimmungsmodul des Kommunikationsendgeräts des betreffenden Benutzers bestimmt, die bestimmte aktuelle Blickrichtung jeweils von diesem Kommunikationsendgerät über das Kommunikationsnetz an die Medienzentrale übertragen, und es werden durch ein Blickrichtungsauswertemodul der Medienzentrale auf Grund der bestimmten aktuellen Blickrichtung und auf Grund von Videoobjekten und/oder Bildobjekten, die von der Medienzentrale über das Kommunikationsnetz an dieses Kommunikationsendgerät übertragen wurden, Bildobjekte bestimmt, die vom Benutzer dieses Kommunikationsendgeräts betrachtet werden. Die Erfassung von Bildobjekten, die von einem Benutzer betrachtet werden, hat den Vorteil, dass statistisch ausgewertet werden kann, welche Bildobjekte insgesamt oder insbesondere durch spezifische Benutzer betrachtet werden. Falls, die Bildobjekte beispielsweise Werbung für Dienstleistungen und/oder Produkte betreffen, die von einem entsprechenden Anbieter angeboten wurden, kann die Verbreitungseffizienz dieser Art Werbung beurteilt werden, ohne dass dazu vom Benutzer Angaben gemacht werden müssen.

Erfindungsgemäss werden durch ein Interessenbestimmungsmodul der Medienzentrale auf Grund der bestimmten Bildobjekte Benutzerinteressenprofile bestimmt und in der Benutzerinteressendatenbank abgespeichert. Der Vorteil, Benutzerinteressenprofile auf Grund der bestimmten Bildobjekte, die von individuellen Benutzern betrachtet werden, zu bestimmen besteht darin, dass diese Benutzerinteressenprofile in der Medienzentraledynamisch und automatisch bestimmt werden können, ohne dass von den Benutzern dafür Befehle und/oder Daten eingegeben werden müssen.

In einer Ausführungsvariante umfassen die Bildobjektinformationen Bestellnummern, die Benutzerkenndaten umfassen eine eindeutige Benutzeridentifizierung und durch ein Bestellmodul der Medienzentrale wird für eines der bestimmten Bildobjekte eine Bestellung eingeleitet, wobei für die Bestellung die diesem Bildobjekt zugeordnete Bestellnummer und die eindeutige Benutzeridentifizierung verwendet wird. Der Vorteil, Bildobjekte mit Bestellnummern zu versehen und auf Grund eines bestimmten, durch einen Benutzer betrachteten Bildobjekts eine Bestellung einzuleiten besteht darin, dass vom betreffenden Benutzer keine Angaben betreffend das gewünschte Objekt, das dem Bildinhalt des vom betreffenden Benutzer betrachteten Bildobjekts entspricht, gemacht werden müssen, respektive durch die Medienzentrale vom Benutzer keine Angaben betreffend das gewünschte Objekt angefragt werden müssen.

In einer Ausführungsvariante werden die bestimmten Bildobjekte durch die Medienzentrale in Videoobjekte eingefügt, welche Videoobjekte von der Medienzentrale über das Kommunikationsnetz an das betreffende Kommunikationsendgerät übertragen werden, wo sie mittels der Anzeigeeinheit dem Benutzer des betreffenden Kommunikationsendgeräts sichtbar gemacht werden. Die Einfügung von Bildobjekten in Videoobjekte, die an das Kommunikationsendgerät eines betreffenden Benutzers übertragen und dort diesem Benutzer mittels einer Anzeigevorrichtung sichtbar gemacht werden, besteht darin, dass dem Benutzer während der Betrachtung der Videoobjekte Bildobjekte sichtbar gemacht werden können, wobei diese Bildobjekte, wie oben angeführt, gemäss dem Interessenprofil des betreffenden Benutzers ausgewählt werden können. Als konkrete Anwendung soll hier beispielsweise angeführt werden, dass dem Benutzer kostenlos Filme (Videoobjekte) abgespielt werden können, denen, beispielsweise von Zeit zu Zeit, Bildobjekte eingefügt werden, deren Bildinhalt Werbung für Produkte und/oder Dienstleistungen betrifft, die von einem Anbieter angeboten werden und die dem jeweiligen Benutzerinteressenprofil entsprechen.

In einer Ausführungsvariante werden die Videoobjekte durch einen Videosynthesizer aus gespeicherten Medienobjekten generiert, wobei die Medienobjekte, denen Medienobjektinformationen zugeordnet sind, beispielsweise durch den Videosynthesizer, so bestimmt werden, dass die Medienobjektinformationen mindestens eine Übereinstimmung, das heisst mindestens eine Korrelation gemäss einem vordefinierten Korrelationswert, mit den Informationen des bestimmten Benutzerinteressenprofils aufweisen. Der Vorteil, die Videoobjekte aus Medienobjekten zu generieren, die insbesondere gemäss dem Interessenprofil des betreffenden Benutzers gewählt werden, besteht darin, dass die Videoobjekte dynamisch und benutzerspezifisch durch den Videosynthesizer generiert werden können. Ein weiterer Vorteil besteht darin, dass Bildobjekte so in die Videoobjekte eingefügt werden können, dass sie vom Benutzer als Bestandteil der den Videoobjekten entsprechenden Videosequenzen wahrgenommen werden, das heisst, dass die Bildobjekte als integraler Bestandteil der betrachteten Videosequenzen wahrgenommen werden.

In einer Ausführungsvariante werden in den Kommunikationsendgeräten mittels Sensoren biometrische Benutzermerkmale erfasst, welche biometrischen Benutzermerkmale in die Benutzerkenndaten eingefügt werden. Der Vorteil dieser Ausführungsvariante liegt einerseits darin, dass biometrische Benutzermerkmale, beispielsweise Fingerabdrücke, Augenmuster, Gesichtsmerkmale und/oder Stimmmuster, eine hohe Sicherheit aufweisen und sich ein Benutzer nicht an spezielle Codes erinnern oderseparate ldentifikationsmittel mit sich führen muss, und andererseits darin, dass die Erfassung dieser biometrischen Merkmale durch entsprechende Sensoren beim Kommunikationsendgerät die diesbezügliche Eingabe von Daten durch den Benutzer erübrigt. Zur Festlegung der Identität eines Benutzers können den biometrischen Merkmalen in einer Datenbank weitere Benutzerangaben zugeordnet sein, beispielsweise Name, Adresse und Bankverbindung. Die biometrischen Merkmale können aber auch zur blossen (anonymen) Wiedererkennung eines betreffenden Benutzers verwendet werden, wobei den biometrischen Merkmalen keine weiteren Angaben zur Identifizierung des Benutzers zugeordnet sind.

In einer Ausführungsvariante werden mittels mikroelektromechanischen Scanners Retinamuster erfasst, welche Retinamuster in die Benutzerkenndaten eingefügt werden. Der Vorteil der Retinamuster liegt darin, dass Retinamuster eine eindeutige Benutzer(wieder)erkennung ermöglichen, die grossen Sicherheitsanforderungen genügt, insbesondere auch deshalb weil Retinamuster wenig veränderliche biometrische Merkmale repräsentieren, die sich im Laufe der Zeit nur geringfügig verändern. Die Verwendung von mikroelektromechanischen Scanners zur Erfassung der Retinamuster hat den Vorteil, dass die mikroelektromechanischen Scanners sehr kleine Dimensionen aufweisen und beispielsweise auch Bestandteil einer virtuellen retinalen Anzeigevorrichtung sein können. In einer Ausführungsvariante werden den Videoobjekten und/oder den Bildobjekten entsprechende Lichtsignale mittels einer solchen virtuellen retinalen Anzeigeeinheit direkt auf die Retina des Benutzer projiziert.

In einer Ausführungsvariante umfasst das Kommunikationsnetz ein Mobilfunknetz, beispielsweise ein GSM-Netz (Global System for Mobile Communications), ein UMTS-Netz (Universal Mobile Telephone System) und/oder ein anderes, beispielsweise satellitenbasiertes, Mobilfunknetz, und die Kommunikationsendgeräte umfassen Mobilfunkgeräte, beispielsweise Mobilfunktelefone und/oder tragbare kommunikationsfähige Computer. Der Vorteil, im erfindungsgemässen System Mobilfunknetze als Kommunikationsnetze und Mobilfunkgeräte als Kommunikationsendgeräte zu verwenden besteht darin, dass die Benutzer mobil sein und sich frei bewegen können.

In einer Ausführungsvariante werden Bildobjekte und zugeordnete Bildobjektinformationen, die jeweils Produkte und/oder Dienstleistungen betreffen und die von Anbietern von solchen Produkten und/oder Dienstleistungen über ein Kommunikationsnetz eingegeben werden, beispielsweise ein Mobilfunknetz oder ein Festnetz, insbesondere das Intemet oderdas öffentliche geschaltete Telefonnetz oder ein ISDN-Netz, entgegengenommen und in der Bildobjektdatenbank abgespeichert. Der Vorteil dieser Ausführungsvariante besteht darin, dass dadurch den Anbietern von Produkten und/oder Dienstleistungen ein direkter Zugang zu einer Werbeplattform gegeben wird, über welchen Zugang die Anbieter Bildobjekte und dazugehörige Bildobjektinformationen auf eigene Initiative und selbstständig in das erfindungsgemässe System zur automatischen und benutzerspezifischen Verbreitung von Bildobjekten eingeben können.

Nachfolgend wird eine Ausführung der vorliegenden Erfindung anhand eines Beispieles beschrieben. Das Beispiel der Ausführung wird durch folgende einzige beigelegte Figur illustriert:

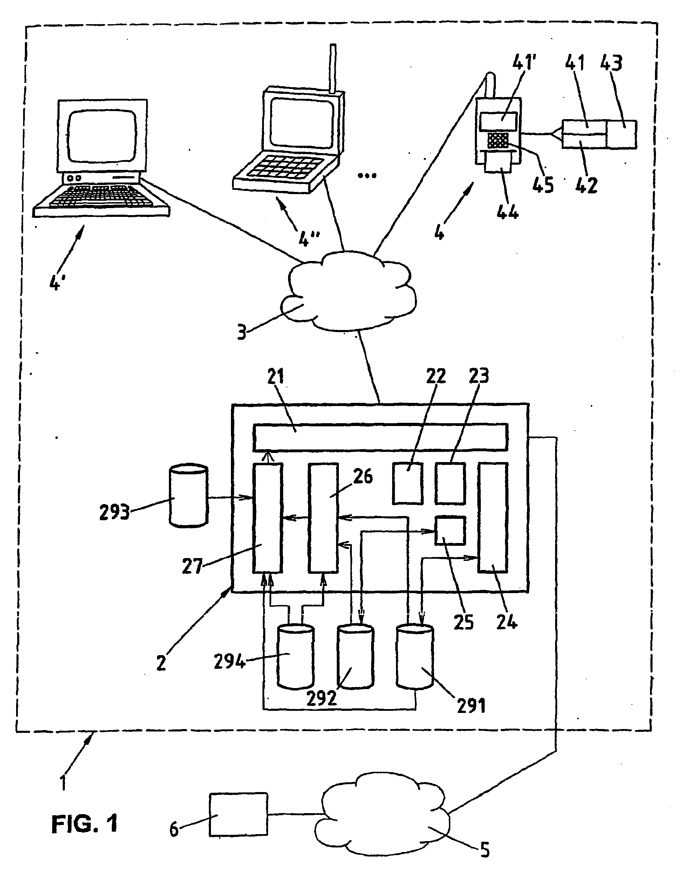

Figur 1 zeigt ein Blockdiagramm des Systems zur Verbreitung von Bildobjekten, welches Blockdiagramm schematisch eine Medienzentrale darstellt, die über ein Kommunikationsnetz mit Kommunikationsendgeräten verbunden ist, welche jeweils über eine Anzeigevorrichtung und über ein Blickrichtungsbestimmungsmodul verfügen.

In der Figur 1 bezieht sich die Bezugsziffer 1 auf das System zur Verteilung von Bildobjekten. Eine Beschreibung der Bildobjekte wurde bereits in der Einleitung gegeben; hier sollen insbesondere Bildobjekte gemäss dem MPEG-4 Standard erwähnt werden, ein ISO/IEC Standard (ISO/IEC 14496), der durch MPEG (Moving Picture Expert Group) entwickelt wurde und betreffend welchem zum Anmeldezeitpunkt beispielsweise auf der Internet-Seite www.cselt.stet.it/mpeg/standards/mpeg-4 eine Übersicht verfügbar war. MPEG-4 bietet einen Standard für a) die Repräsentation von Objekten mit hörbarem, sehbarem oder audiovisuellem Inhalt, sogenannte Medienobjekte, deren Inhalt natürlicher Herkunft (durch Mikrofon und/oder Kamera aufgenommen) oder synthetischer Herkunft (durch Computer erzeugt) sein kann, b) die Beschreibung der Komposition solcher Medienobjekte zu zusammengesetzten Medienobjekten, die audiovisuelle Szenen bilden, c) das Multiplexen und Synchronisieren von Daten solcher Medienobjekte für die Übermittlung über Kommunikationsnetze, und d) die Interaktion mit audiovisuellen Szenen, die beim Empfänger generiert werden. Gemäss MPEG-4 sind audiovisuelle Szenen aus mehreren hierarchisch organisierten Medienobjekten zusammengesetzt, beispielsweise aus unbewegten Bildobjekten, zum Beispiel ein unbewegter Hintergrund, aus bewegten Bildobjekten, die hier auch als Videoobjekte bezeichnet werden, zum Beispiel eine singende Musikerin, und aus Audioobjekten, zum Beispiel der Gesang der Musikerin. MPEG-4 definiert die codierte Repräsentation von Medienobjekten mit Inhalt natürlicher oder synthetischer Herkunft, die in zweioder dreidimensionaler Form ausgeführt sein können. Für die Realisierung der vorliegenden Erfindung wird vorzugsweise der MPEG-4 Standard, respektive eine Weiterentwicklung des MPEG-4 Standards oder ein ähnlicher Standard, als Standard für unbewegte Bildobjekte, für bewegte Bildobjekte (oder Videoobjekte), und für Audioobjekte verwendet, wobei die unbewegten Bildobjekte sowie die bewegten Bildobjekte (oder Videoobjekte) einfache oder zusammengesetzte Medienobjekte gemäss diesem bevorzugten Standard sind und wobei diese Medienobjekte, wie oben erwähnt, auch Audioobjekte umfassen können. Für die End-zu-End-Übertragung der Medienobjekte über Kommunikationsnetze 3, 5 kann beispielsweise das in MPEG-4 definierte Delivery Multimedia Integration Framework (DMIF)-Protokoll verwendet werden. Für die Beschreibung von Szenen, die aus individuellen Medienobjekten zusammengesetzt sind, kann das in MPEG-4 definierte Binary Format for Scenes (BIFS) verwendet werden, welches auf der Virtual Reality Modeling Language (VRML) basiert. Die Szenebeschreibung wird zusammen mit den individuellen Medienobjekten codiert und übertragen.

Als Teil des Systems 1 zur Verbreitung von Bildobjekten ist in der Figur 1 schematisch ein Kommunikationsnetz 3 dargestellt, über das kommunikationsfähige Kommunikationsendgeräte 4, 4' 4" mit einer Medienzentrale 2 kommunizieren, das heisst insbesondere Daten austauschen können. Das Kommunikationsnetz 3 kann mehrere verschiedenartige Kommunikationsnetze umfassen, beispielsweise Festnetze, zum Beispiel das öffentliche geschaltete Telefonnetz, ein ISDN-Netz (Integrated Services Digital Network), ein PLC-Netz (Power Line Communication) oder ein IP-Netz (Internet Protocol), insbesondere das weltweite Internet, und/oder Mobilfunknetze, zum Beispiel ein GSM- oder UMTS-Netz oder ein anderes, beispielsweise satellitenbasiertes, Mobilfunknetz. In entsprechender Weise können die mit dem Kommunikationsnetz 3 verbindbaren Kommunikationsendgeräte 4, 4', 4" verschiedenartige Kommunikationsendgeräte umfassen, beispielsweise festinstallierte Kommunikationsendgeräte 4', zum Beispiel ein Personal-Computer oder öffentlich zugängliche Terminals, oder tragbare kommunikationsfähige Computer 4", zum Beispiel Laptop-Computer, Palmtop-Computer oder mobile Datenassistenten (PDA, Personal Data Assistant) mit geeigneten Kommunikationsmodulen, oder Mobilfunkgeräte, insbesondere Mobilfunktelefone 4. Für den Transport von Daten, insbesondere Daten der Bild- und Videoobjekte, zwischen der Medienzentrale 2 und dem Mobilfunktelefon 4' können beispielsweise GPRS-Dienste (Generalized Packet Radio Services) oder HSCSD-Dienste (High Speed Circuit Switched Data) oder andere geeignete Dienste verwendet werden. Das Kommunikationsnetz 3 kann auch ein unidirektionales Broadcastsystem umfassen, beispielsweise ein DAB- (Digital Audio Broadcasting) oder DVB-System (Digital Video Broadcasting), über welches Medienobjekte von der Medienzentrale 2 an die Kommunikationsendgeräte 4,4',4" übertragen werden, die zu diesem Zweck mit einem DAB-, respektive DVB-Empfänger, ausgerüstet sind und die für den Rückkanal zur Medienzentrale 2 ein geeignetes Kommunikationsmodul für die Kommunikation über ein Fest-oder Mobilfunknetz des Kommunikationsnetzes 3 umfassen. Durch die drei Punkte in der Figur 1 soll angedeutet werden, dass eine Vielzahl von Kommunikationsendgeräten 4, 4', 4" über das Kommunikationsnetz 3 mit der Medienzentrale 2 verbindbar sind. Obwohl in der Figur 1 gewisse Komponenten der Kommunikationsendgeräte nur für das Mobilfunktelefon 4 dargestellt sind, können sämtliche dieser Komponenten auch bei den anderen Kommunikationsendgeräten 4' und 4" verfügbar sein. Als Beispiele für solche gewisse Komponenten sollen an dieser Stelle die Anzeigeeinheit 41, das Blickrichtungsbestimmungsmodul 42 und der Retina-Scanner 43 erwähnt werden, welche beispielsweise über eine kontaktbehaftete oder eine kontaktlose Geräteschnittstelle mit dem Mobilfunktelefon 4 verbunden sind.

Die Anzeigeeinheit 41 ist beispielsweise eine virtuelle retinale Anzeigeeinheit 41, die Bildobjekte für den Benutzer sichtbar macht, indem sie den Bildobjekten entsprechende Lichtsignale direkt auf die Retina des Auges des Benutzers projiziert. Für diese Projizierung und für die Erfassung von von Objekten reflektiertem oder abgestrahltem Licht umfasst die Anzeigeeinheit 41 mindestens ein mikroelektromechanisches (MEMS, Microelectromechanical System) Element, insbesondere einen mikroelektromechanischen Scanner. Die Verwendung von mikroelektromechanischen Scanners, die ein mikroelektromechanisches Element mit einem zweiachsigen Spiegel umfassen, für die Projizierung von Bildobjekten in einer direkten retinalen Anzeigeeinheit und/oder für die Aufnahme von von Objekten reflektiertem oder abgestrahltem Licht wird beispielsweise in der Patentanmeldung WO 98/13720 beschrieben. Eine virtuelle retinale Anzeigeeinheit (Virtual Retinal Display, VRD), welche Bildobjekten entsprechende Lichtsignale direkt auf die Retina eines Betrachters projizieren kann, wurde beispielsweise in den Patentanmeldungen WO 94/09472, WO97/37339 und in der oben erwähnten Patentanmeldung WO 98/13720 beschrieben. Diese virtuellen retinalen Anzeigeeinheiten können über eine Videoschnittstelle mit Daten von Bildobjekten versorgt werden, beispielsweise in Form eines RGB-Signals, eines NTSC-Signals, eines VGA-Signals oder eines anderen formatierten farbigen oder monochromen Video-oder Grafiksignals. Der Fachmann wird verstehen, dass es vorteilhaft sein kann, die in den erwähnten Patentschriften WO 94/09472 und WO 97/37339 beschriebene virtuelle retinale Anzeigeeinheit, respektive die dort beschriebene Videoschnittstelle, so anzupassen, dass sie je nach den verwendeten Bildobjekten verschiedene Datenformate effizient entgegennehmen und verarbeiten kann. Mittels eines nicht dargestellten Schnittstellenmoduls, welches beispielsweise im Kommunikationsendgerät 4 eingerichtet ist, können Daten von Bildobjekten aber auch geeignet an die Videoschnittstelle angepasst werden, respektive entgegengenommene Daten von Bildobjekten so umgewandelt werden, dass sie an die Videoschnittstelle angelegt und mittels der virtuellen retinalen Anzeigeeinheit 41 für den Benutzer sichtbar gemacht werden können.

Die Komponenten der Anzeigeeinheit 41 sind vorzugsweise in einem gemeinsamen Gehäuse integriert oder auf einem gemeinsamen Träger installiert, wobei dieses Gehäuse oder dieser Träger vorzugsweise so ausgestaltet ist, dass es/er von einem Benutzer wie eine herkömmliche Brille oder ein Helm aufgesetzt werden kann. Weitere Komponenten, wie beispielsweise ein Mikrofon, ein Kopfhörer, die erwähnte Geräteschnittstelle, das Blickrichtungsbestimmungsmodul 42 und/oder der Retina-Scanner 43 können ebenfalls an/in diesem gemeinsamen Träger angebracht werden. Es sind auch Kommunikationsendgeräte 4, 4, 4" möglich, die zusammen mit der Anzeigeeinheit 41, sowie gegebenenfalls zusammen mit den letztgenannten weiteren Komponenten, in einem gemeinsamen Gehäuse oder auf einem gemeinsamen Träger (als eine Vorrichtung) ausgeführt sind.

Wie in der Figur 1 schematisch dargestellt ist, ist mit der Anzeigeeinheit 41 das Blickrichtungsbestimmungsmodul 42 verbunden, welches durch Ermittlung der aktuellen Augenpositionen des Benutzers beim Betrachten von Bildobjekten die aktuelle Blickrichtung der Augen des Benutzers bestimmt und über die oben erwähnte Geräteschnittstelle an das Mobilfunktelefon 4 leiten kann. Ein Blickrichtungsbestimmungsmodul (Eye Tracker), weiches aktuelle Augenpositionen basierend auf der Position der Pupille eines Benutzers bestimmt, wurde ebenfalls in der oben erwähnten Patentanmeldung WO 94/09472 beschrieben und kann vom Fachmann so erweitert werden, dass die bestimmte Augenposition über die Geräteschnittstelle an das Mobilfunktelefon 4 übermittelt werden kann; je nach Ausführung können Werte für beide Augen verfügbar gemacht werden. An dieser Stelle soll zudem angeführtwerden, dass ermittelte Augenpositionen, beispielsweise im Mobilfunktelefon 4, zusätzlich mit erfasster Kopfposition, respektive Kopfbewegung, die beispielsweise durch eine zusätzliche nicht dargestellte Körperteilpositionsbestimmungseinheit bezüglich der horizontalen und vertikalen Ebene als horizontale und vertikale Kopfdrehwinkel, erfasst werden, kombiniert werden können, um die eigentliche Blickrichtung des Benutzers zu bestimmen, die nicht auf die Blickrichtung bezüglich der Anzeigeeinheit 41 beschränkt ist.

Mittels des oben erwähnten mikroelektromechanischen Scanners, respektive mittels eines zusätzlichen solchen mikroelektromechanischen Scanners, der neben der Projizierung von Lichtsignalen auf die Retina auch für die Erfassung von von Objekten reflektiertem oder abgestrahltem Licht verwendet werden kann, kann auch das Retinamuster eines Benutzers, insbesondere das durch die Blutadern der Retina gebildete Muster, erfasst werden. Zu diesem Zweck führt der mikroelektromechanische Scanner das von der Retina reflektierte Licht beispielsweise mittels eines Strahlteilers (mindestens) einem lichtempfindlichen Element zu. Ein solcher Retina-Scanner, der auch für mehrfarbige Bilder ausgeführt werden kann und sich zum Erfassen von solchen Retinamustern eignet, wurde beispielsweise in der oben erwähnten Patentanmeldung WO 98/13720 beschrieben. Die im (in den) lichtempfindlichen Element (en) erfassten Lichtwerte werden beispielsweise im Retina-Scanner 43 digitalisiert und aus den dadurch erhaltenen Reflexionsdaten das Retinamuster generiert, beispielsweise mittels einer Differenzoperation aus projiziertem und reflektiertem Licht. Die Erfassung von Retinamustern du rch den Retina-Scanner 43, der die oben beschriebenen Komponenten zur Erfassung der Retinamuster umfasst, kann beispielsweise mittels eines entsprechenden Befehls, der vom Mobilfunktelefon 4 über die Geräteschnittstelle an den Retina-Scanner 43 geleitet wird, initiiert werden. Es ist auch möglich, dass der Retina-Scanner 43 für die Bestimmung der Retinamuster mit einer separaten Lichtquelle versehen ist, beispielsweise eine LED (Light Emitting Diode) oder ein Laser, deren Lichtstrahlen, beispielsweise mittels geeignetem, mikroelektromechanischem beweglichem Spiegel, als Rastervon Bild- respektive Lichtpunkten, auf die Retina projiziert werden, so dass die erfassten Reflexionsdaten, die wie oben erwähnt, aus den reflektierten Lichtstrahlen gewonnen werden, dem Retinamuster entsprechen. Diese direkte Erfassung der Retinamuster kann während der gleichzeitigen Betrachtung von Bildobjekten durch den Benutzer erfolgen, wenn die separate Lichtquelle Licht ausstrahlt, das andere Wellenlängen umfasst, als die den Bildobjekten entsprechenden Lichtsignale, beispielsweise wenn diese Lichtquelle eine Infrarotlichtquelle ist, und wenn das verwendete lichtempfindliche Element entsprechend für dieses Licht ausgelegt ist.

An dieser Stelle sollte erwähnt werden, dass in diesem bevorzugten Ausführungsbeispiel nur auf die Erfassung von Retinamustern als Augenmerkmale eingegangen wird, dass aber an deren Stelle auch andere Augenmuster, beispielsweise Muster der Iris (Regenbogenhaut), erfasst werden können.

Der Fachmann wird verstehen, dass im Sinne der vorliegenden Erfindung von der virtuellen retinalen Anzeigeeinheit 41, vom Blickrichtungsbestimmungsmodul 42 und vom Retina-Scanner 43 verwendete Komponenten, wie beispielsweise drehbare mikroelektromechanische Spiegel, Lichtquellen, lichtempfindliche Elemente und/oder programmierbare Prozessoren in verschiedenen Ausführungsvarianten der Anzeigeeinheit 41, des Blickrichtungsbestimmungsmoduls 42 und des Retina-Scanners 43 kombiniert verwendet werden können oder für die Anzeigeeinheit 41, das Blickrichtungsbestimmungsmodul 42 und den Retina-Scanner 43 jeweils separate Komponenten verwendet werden können. Es ist auch möglich, dass einzelne Komponenten, beispielsweise eine LED-Lichtquelle und ein lichtempfindliches Element, durch Komponenten mit kombinierter Funktion ersetzt werden können.

Die Medienzentrale 2 besteht aus einem oder mehreren miteinander verbundenen Computern, insbesondere leistungsfähige Server, die über ein Kommunikationsmodul 21 verfügen, das mit den nötigen Hard-und Softwarekomponenten zur Kommunikation über das Kommunikationsnetz 3 mit den Kommunikationsendgeräten 4, 4', 4" und über das Kommunikationsnetz 5, das wie das Kommunikationsnetz 3 ausgeführt sein kann, mit Kommunikationsendgeräten 6 von Anbietern, die beispielsweise Produkte und/oder Dienstleistungen anbieten, ausgestattet ist. Wie in der Figur 1 schematisch dargestellt ist, ist die Medienzentrale 2 mit verschiedenen Datenbanken 291-294 verbunden. Diese Datenbanken 291-294 können auf separaten, mit der Medienzentrale 2 verbundenen Computern ausgeführt sein und/oder gemeinsam auf dem/den selben Computer(n) wie die Mendienzentrale 2 ausgeführt sein. Die Datenbanken 291-294 können auch in einer gemeinsamen Datenbank ausgeführt werden. Zur Speicherung ihrer Daten umfassen die Datenbanken 291-294 geeignete Datenträger, die je nach Volumen und nötiger Zugriffszeit der darauf gespeicherten Daten unterschiedlich ausgeführt sein können. Die Medienzentrale 2 umfasst weitere funktionale Module, insbesondere die in der Figur 1 dargestellten funktionalen Module 22-27, die entweder als programmierte, in einem Speicher der Medienzentrale 2 gespeicherte und auf einem Prozessor der Medienzentrale 2 ausführbare Softwaremodule realisiert sind, oder die als Kombination von solchen Softwaremodulen mit geeigneten Hardwarekomponenten realisiert sind, oder die als reine Hardwarekomponenten realisiert sind.

An dieser Stelle soll klargestellt werden, dass die in der Figur 1 dargestellten Pfeile, die die funktionalen Module 24-27 und die Datenbanken 291-294 miteinanderverbinden, zum besseren Verständnis des später beschriebenen Datenflusses zwischen diesen Modulen und Komponenten angebracht sind, dass diese Pfeile aber nicht in einschränkender Weise die technische Realisierung der Kommunikationskanäle, respektive Schnittstellen, zwischen diesen Modulen und Komponenten illustrieren.

Ein interessierter Benutzer kann mit seinem kommunikationsfähigen Kommunikationsendgerät 4, 4', 4" die Medienzentrale 2 über das Kommunikationsnetz 3 kontaktieren, beispielsweise durch automatisiertes oder manuelles Wählen einer entsprechenden Dienstnummer der Medienzentrale 2. Nach erfolgter Kontaktaufnahme, beispielsweise auf Anfrage der Medienzentrale 2, überträgt das Kommunikationsendgerät 4 Benutzerkenndaten des betreffenden Benutzers über das Kommunikationsnetz 3 an die Medienzentrale 2, wo sie beispielsweise durch das Kommunikationsmodul 21 entgegengenommen und an das Interessenbestimmungsmodul 25 weitergeleitet werden. Die Benutzerkenndaten werden in der Medienzentrale 2 zwischengespeichert, wobei für die Zuordnung eines betreffenden Benutzers zu seinem Kommunikationsendgerät 4, 4', 4" den Benutzerkenndaten eine Identifizierung zugeordnet wird, die das Kommunikationsendgerät 4, 4', 4" betrifft, von dem die Benutzerkenndaten erhalten wurden, oder die die Kommunikationsverbindung (Session) mit diesem Kommunikationsendgerät 4, 4', 4" betrifft. Die Benutzerkenndaten umfassen beispielsweise biometrische Benutzermerkmale, beispielsweise Fingerabdrücke, Augenmuster, Gesichtsmerkmale und/oder Stimmmuster, die beispielsweise auf einer mit dem Kommunikationsendgerät 4 entfembar verbundenen Chipkarte 44 gespeichertsind, oder die durch geeignete Sensoren des Kommunikationsendgeräts 4 erfasst werden. Das Augenmuster ist beispielsweise ein Retinamuster, das durch den oben erwähnten Retina-Scanner43 erfasst wird. Die Benutzerkenndaten können auch weitere Elemente umfassen, beispielsweise eine eindeutige Benutzeridentifizierung, die international verwendet werden kann, beispielsweise eine International Mobile Subscriber Identity (IMSI) zur Identifizierung bei einem Netzwerkbetreiber oder eine Benutzeridentifizierung, beispielsweise eine International Debit User Identification (IDUI), zur Identifizierung bei Finanzdienstleistem, zum Beispiel Banken und/oder Kreditkartenunternehmen, oder die zur eindeutigen Identifizierung des Benutzers durch einen oder eine Gruppe von Anbietern verwendet werden kann, beispielsweise eine Mitgliedernummer.

Mittels IVR- (Interactive Voice Response) oder Spracherkennungsdiensten oder durch Übermittlung von jeweils auf einer Anzeigeeinheit des betreffenden Kommunikationsendgeräts darstellbaren Menustrukturen, beispielsweise in Form eines Softwareprogramms, beispielsweise ein Java Applet (Java ist ein eingetragenes Warenzeichen der Firma Sun Microsystems), kann die Medienzentrale 2 dem Benutzer ermöglichen, aus verschiedenen verfügbaren Dienst- und/oder Medienangeboten, insbesondere Filmangebote, zu wählen. Entsprechend der durch den Benutzer getroffenen Wahl, oder andernfalls entsprechend einer durch die Medienzentrale 2 getroffenen Wahl, beispielsweise auf Grund eines in der Benutzerinteressendatenbank 292 gespeicherten Benutzerinteressenprofils, das den entgegengenommenen Benutzerkenndaten zugeordnet ist, werden danach von der Medienzentrale 2 Medienobjekte, insbesondere Videoobjekte, beispielsweise kostenlos, über das Kommunikationsnetz 3 an das Kommunikationsendgerät 4 des betreffenden Benutzers übertragen, wo sie mittels der Anzeigeeinheit 41 diesem Benutzer sichtbar gemacht werden. Dabei entsprechen die Videoobjekte Filmen, die in der Videodatenbank 293 gespeichert sind, oder die Videoobjekte werden durch einen Videosynthesizer 27 der Medienzentrale 2 aus Medienobjekten generiert, die in der Medienobjektdatenbank 294 gespeichert sind. Die Generierung von Videoobjekten durch den Videosynthesizer 27 ermöglicht die automatische Herstellung von synthetischen oder virtuellen Filmen, beispielsweise gemäss objektorientierten Scripts.

Während der Benutzer die mittels der Anzeigeeinheit 41 sichtbar gemachten, durch die Medienzentrale 2 übertragenen Medienobjekte, insbesondere Videoobjekte und Bildobjekte, betrachtet, wird laufend, beispielsweise periodisch gemäss einer vordefinierten Zeitperiode, oder jeweils auf Anfrage durch die Medienzentrale 2, durch das Blickrichtungsbestimmungsmodul 42 des Kommunikationsendgeräts 4 die aktuelle Blickrichtung von mindestens einem Auge des Benutzers bestimmt und, beispielsweise zusammen mit einer Zeitangabe oder einer Angabe zur Identifizierung des aktuellen dargestellten Medienobjekts, über das Kommunikationsnetz 3 an die Medienzentrale 2 übertragen. Auf Grund der in der Medienzentrale 2 entgegengenommenen aktuellen Blickrichtung eines Benutzers wird durch ein Blickrichtungsauswertemodul 23 in der Medienzentrale 2 das Medienobjekt, respektive Videoobjekt oder Bildobjekt, bestimmt, das in der aktuellen Blickrichtung der durch den Benutzer betrachteten Video- und/oder Bildobjekte liegt, welche von der Medienzentrale 2 an das Kommunikationsendgerät 4, 4', 4" des Benutzers übertragen wurden. Dabei wird dieses Medienobjekt, respektive Videoobjekt oder Bildobjekt, dadurch bestimmt, dass aus der aktuellen Blickrichtung bezüglich der Anzeigeeinheit 41 die Koordinaten der betrachteten Stelle des zu diesem Zeitpunkt dem Benutzer sichtbar gemachten Medienobjekts (Bild- oder Videoobjekt) ermittelt werden, und dass auf Grund dieser Koordinaten das Medienobjekt, respektive Videoobjekt oder Bildobjekt, bestimmt wird, das sich an dieser Stelle befindet. Eine Objektreferenz auf das derart bestimmte Medienobjekt, respektive Videoobjekt oder Bildobjekt, wird vom Blickrichtungsauswertemodul 23 anderen Modulen der Medienzentrale 2, beispielsweise dem Interessenbestimmungsmodul 25, zur weiteren Verwendung verfügbar gemacht.

Durch das Interessenbestimmungsmodul 25 der Medienzentrale 2 werden die Objektreferenzen auf die bestimmten Medienobjekte, respektive Video- oder Bildobjekte, den Benutzerkenndaten des betreffenden Benutzers zugeordnet abgespeichert und, beispielsweise auf Grund der Häufigkeit und/oder der Zeitdauer mit der diese Medienobjekte, respektive Video- oder Bildobjekte, vom betreffenden Benutzer betrachtet werden, ein Benutzerinteressenprofil erstellt, respektive aktualisiert, das den Benutzerkenndaten des betreffenden Benutzers zugeordnet in der Benutzerinteressendatenbank292 abgespeichertwird. Zur Erstellung des Benutzerinteressenprofils werden vom Interessenbestimmungsmodul 25 Medienobjektinformationen, insbesondere Video- und/oder Bildobjektinformationen, berücksichtigt, die jeweils dem betreffenden Medienobjekt, respektive Video- oder Bildobjekt, zugeordnet in der Medienobjektdatenbank 294, respektive Bildobjektdatenbank 291, gespeichert sind. Für zusammengesetzte Medienobjekte, die in derVideodatenbank 293 gespeichert sind, sind jeweils Medienobjekte, respektive Video- oder Bildobjekte, aus denen die Medienobjekte in der Videodatenbank 293 zusammengesetzt sind, sowie dazugehörige Medienobjektinformationen, respektive Video- oder Bildobjektinformationen, in der Medienobjektdatenbank 294 und/oder in der Bildobjektdatenbank 291 gespeichert. Insbesondere Medienobjektinformationen, respektive Video- oder Bildobjektinformationen, für Medienobjekte, respektive Video-oder Bildobjekte, die Produkte und/oder Dienstleistungen betreffen, umfassen beispielsweise Angaben betreffend diese Produkte und/oder Dienstleistungen, zum Beispiel Typen, Namen, strukturierte Klassifikationen, Kosten, technische Eigenschaften und/oder äussere Erscheinung (Design, Farbe), und/oder Angaben betreffend den/die Anbieter und/oder Hersteller von solchen Produkten und/oder Dienstleistungen, beispielsweise Branche, Namen, Adressen, Anzahl Mitarbeiter, finanzielle Verhältnisse und/oder Gründungsjahr der Firma. In entsprechender Weise umfasst das Benutzerinteressenprofil beispielsweise Angaben betreffend Produkte und/oder Dienstleistungen, für die sich der betreffende Benutzer interessiert, zum Beispiel Typen, Namen, strukturierte Klassifikationen, Kosten, technische Eigenschaften und/oder äussere Erscheinung (Design, Farbe), und/oder Angaben betreffend Anbieter und/oder Hersteller von solchen Produkten und/oder Dienstleistungen, für die sich der betreffende Benutzer interessiert, beispielsweise Branchen, Namen, Adressen, Anzahl Mitarbeiter, finanzielle Verhältnisse und/oder Gründungsjahr. Im Benutzerinteressenprofil können auch Angaben über die vom betreffenden Benutzer gewünschten Dienst- und/oder Medienangebote, insbesondere Filmangebote, enthalten sein. Es ist auch möglich, dass Benutzerinteressenprofile durch den Benutzer selber on-line, beispielsweise über das Kommunikationsnetz 3, respektive off-line, definiert und direkt, respektive zu einem späteren Zeitpunkt, in der Benutzerinteressendatenbank 292 aktualisiert werden.

Durch ein Medienobjektbestimmungsmodul 26 wird in der Medienzentrale 2 auf Grund der von einem betreffenden Benutzer entgegengenommenen Benutzerkenndaten das diesen Benutzerkenndaten in der Benutzerinteressendatenbank 492 zugeordnete Benutzerinteressenprofil bestimmt. Auf Grund des bestimmten Benutzerinteressenprofils ermittelt das Medienobjektbestimmungsmodul 26 Medienobjekte, die in der Medienobjektdatenbank 294 gespeichert sind, respektive Bildobjekte, die in der Bildobjektdatenbank 291 gespeichert sind, für die sich der betreffende Benutzer interessieren könnte. Zu diesem Zweck wird vom Medienobjektbestimmungsmodul 26 die Korrelation zwischen dem Benutzerinteressenprofil und den Medienobjektinformationen, respektive Bildobjektinformationen, bestimmt, die jeweils den Medienobjekten, respektive den Bildobjekten, zugeordnet in der Medienobjektdatenbank 294, respektive der Bildobjektdatenbank 291, gespeichert sind. DerKorrelationsfaktor, das heisst der Grad der Übereinstimmung zwischen Benutzerinteressenprofil und den Medienobjektinformationen, respektive Bildobjektinformationen, der vorausgesetzt wird, dass ein Medienobjekt, respektive ein Bildobjekt, vom Medienobjektbestimmungsmodul 26 als für den betreffenden Benutzer interessant eingestuft wird, kann dabei variiert werden, beispielsweise je nachdem, wieviele Angaben in einem betreffenden Benutzerinteressenprofil enthalten sind. Eine minimale Korrelation zwischen Benutzerinteressenprofil und den Medienobjektinformationen, respektive Bildobjektinformationen, ist beispielsweise die, beispielsweise semantische, Übereinstimmung von mindestens einem Datenelement. Objektreferenzen auf in der Medienobjektdatenbank 294 gespeicherte Medienobjekte, respektive auf in der Bildobjektdatenbank 291 gespeicherte Bildobjekte, die als für den Benutzer interessant eingestuft werden, werden vom Medienobjektbestimmungsmodul 26 an den Videosynthesizer 27 weitergeleitet. Dabei wird die zeitliche Abfolge der Weiterleitung von Objektreferenzen an den Videosynthesizer 27, insbesondere wenn zahlreiche Medienobjekte, respektive Bildobjekte, als für den Benutzer interessant eingestuft werden, beispielsweise durch das Medienobjektbestimmungsmodul 26 gesteuert. Das Medienobjektbestimmungsmodul 26 kann die Anzahl Objektreferenzen, die an den Videosynthesizer 27 weitergeleitet werden, auch auf eine vordefinierte Anzahl beschränken, wobei diese beispielsweise als Anzahl pro Zeiteinheit definiert sein kann, und wobei vorteilhafterweise Objektreferenzen auf Medienobjekte, respektive Bildobjekte, mit der höchsten ermittelten Korrelation bevorzugt weitergeleitet werden.

Der Videosynthesizer entnimmt der Objektdatenbank 291 jeweils das einer Objektreferenz entsprechende Bildobjekt und fügt es in die Videoobjekte ein, die aus der Videodatenbank 293 an das Kommunikationsendgerät 4 des betreffenden Benutzers übertragen werden, von dem die betreffenden Benutzerkenndaten erhalten wurden. Die Koordinaten, bei denen das Bildobjekt in das Videoobjekt eingefügt wird, können beispielsweise vorausdefiniert sein oder mit einem Zufallsalgorithmus bestimmt werden. Neben der Integration von Bildobjekten in den durch den Benutzer wahrgenommenen Bildbereich eines Videoobjekts, können Bildobjekte aber auch so in die Videoobjekte eingefügt werden, dass sie aus der Sicht des Benutzers die Videosequenz unterbrechen, indem sie den ganzen Bildbereich ausfüllen. Neben der Einfügung von Bildobjekten in Videoobjekte, kann der Videosynthesizer auch Videoszenen, respektive Filme, synthetisch generieren, indem Medienobjekte aus der Medienobjektdatenbank 294 entnommen werden, insbesondere Medienobjekte, für die Objektreferenzen vom Medienobjektbestimmungsmodul 26 erhalten wurden, und beispielsweise gemäss vordefinierten Scripts, zu neuen zusammengesetzten Medienobjekten, respektive Videoobjekten, zusammengesetzt werden, die an das Kommunikationsendgerät 4 eines betreffenden Benutzers übertragen werden. Bildobjekte, für die Objektreferenzen vom Medienobjektbestimmungsmodul 26 erhalten wurden, können vom Videosynthesizer ebenfalls in solche synthetisch generierte Medienobjekte, respektive Videoobjekte, eingefügt werden. An dieser Stelle soll nochmals erwähnt werden, dass die Bildobjekte aus der Bildobjektdatenbank 291, die in die Medienobjekte, respektive Videoobjekte, eingefügt werden, nicht nur auf unbewegte Bilder beschränkt sind, sondern dass sie auch bewegte Bilder, ja selbst Audioobjekte, enthalten können. Für statistische Auswertungen können weitergeleitete Objektreferenzen in der Medienzentrale 2 abgespeichert und numerisch erfasst werden.

In einer Ausführungsvariante umfassen die Bildobjektinformationen der Bildobjekte zusätzlich auch eine Bestellnummer, die eine Identifizierung eines Produkts und/oder einer Dienstleistung sowie beispielsweise eine Identifizierung eines Anbieters dieses Produkts und/oder dieser Dienstleistung umfasst. Solche Bildobjekte können beispielsweise für den Benutzer mit einem sichtbaren grafischen Erkennungszeichen markiert werden. Falls der Benutzer ein solches Bildobjekt betrachtet und gleichzeitig einen vordefinierten Bestellbefehl an die Medienzentrale 2 übermittelt, zum Beispiel mittels gesprochener Sprache oder mit Bedienungselementen 45 des Kommunikationsendgeräts 4 oder durch unmittelbar nachfolgende Betrachtung eines durch die Anzeigeeinheit 41 für den Benutzer sichtbar gemachten grafischen Steuer-Icons, wird in der Medienzentrale 2 durch das Bestellmodul 22 eine Bestellung eingeleitet. Dabei wird, gegebenenfalls nach entsprechender Bestätigung durch den betreffenden Benutzer, eine Bestellung generiert, die die Bestellnummer sowie Angaben zur eindeutigen Identifizierung des betreffenden Benutzers umfasst, und an den betreffenden Anbieter geleitet, beispielsweise per E-Mail, per Telefax oder mittels herkömmlicher Briefpost. Benutzerkenndaten mit biometrischen Merkmalen ermöglichen zwar einen Benutzer eindeutig wiederzuerkennen, für die Abwicklung einer Bestellung sollten diesen Benutzerkenndaten aber weitere benutzerspezifische Angaben wie beispielsweise Name und Adresse, insbesondere eine Zustelladresse, zugeordnet sein. Falls solche Angaben nicht in der Medienzentrale 2 verfügbar sind ist es von Vorteil, wenn die Benutzerkenndaten eine alternative oder zusätzliche eindeutige Benutzeridentifizierung umfassen, beispielsweise eine IMSI (International Mobile Subscriber Identity), die vom Betreiber des Kommunikationsnetzes 3 dazu verwendet werden kann, den betreffenden Benutzer zu identifizieren und die Bestellung mit weiteren Angaben des Benutzers, beispielsweise aus der Teilnehmerdatenbank, zu vervollständigen, bevor sie an den betreffenden Anbieter weitergeleitet werden.

Um Anbietern von Produkten und/oder Dienstleistungen zu ermöglichen, Bildobjekte betreffend ihre Produkte und/oder Dienstleistungen über das beschriebene System zur benutzerspezifischen Verbreitung von Bildobjekten verbreiten zu lassen, verfügt die Medienzentrale 2 über ein Bildobjekteingabemodul 24, auf das von diesen Anbietern mittels geeigneten Kommunikationsendgeräten 6 und mittels geeigneter Zugangssoftware, beispielsweise Browsers, über das Kommunikationsnetz 5 zugegriffen werden kann. Neben vordefinierten Eingabeformularen für die Eingabe von Bildobjektinformationen, kann das Bildobjekteingabemodul22 den Anbietern beispielsweise auch Konvertierungs- und Editierwerkzeuge zur Verfügung stellen, um beispielsweise die Eingabe von Bildobjekten zu erleichtern, die ein anderes als das von der Medienzentrale 2 verwendete Format verwenden. Über das Bildobjekteingabemodul 22 eingegebene Bildobjekte und dazugehörige Bildobjektinformationen werden durch das Bildobjekteingabemodul 22 in der Bildobjektdatenbank 291 gespeichert. Den Anbietern kann beispielsweise ein Geldbetrag in Abhängigkeit der Anzahl und/oder des Datenvolumens der gespeicherten Bildobjekte und zugehörigen Bildobjektinformationen in Rechnung gestellt werden. Dieser Geldbetrag kann auch abhängig von der Speicherdauer (die beispielsweise limitiert sein kann) dieser Bildobjekte in der Bildobjektdatenbank 291 und/oder von der Anzahl Übertragungen der Bildobjekte an Kommunikationsendgeräte 4, 4', 4" von interessierten Benutzern ermittelt werden.

Das erfindungsgemässe System und Verfahren zur Verbreitung von Bildobjekten ermöglicht eine benutzerspezifische Verbreitung der Bildobjekte gemäss Benutzerinteressenprofilen. Durch das System und das Verfahren zurbenutzerspezifischen Verbreitungvon Bildobjekten können zudem auch diese Benutzerinteressenprofile automatisch ermittelt werden, ohne dass dabei betreffende Benutzer Daten eingeben müssen. Das beschriebene System und Verfahren kann auch Benutzerkenndaten von betreffenden Benutzern automatisch erfassen, ohne dass der Benutzer dazu Daten eingeben muss, und ermittelte Benutzerinteressenprofile diesen Benutzerkenndaten zuordnen. Durch die Speicherung und Zuordnung von ermittelten Benutzerinteressenprofilen und Benutzerkenndaten können die Benutzerinteressenprofile zu späteren Zeitpunkten einem betreffenden Benutzer wieder zugeordnet werden, was beispielsweise anonym, das heisst ohne Kenntnis der Identität des betreffenden Benutzers, erfolgen kann, wenn den Benutzerkenndaten keine weiteren Personaldaten zugeordnet sind, die die Bestimmung der Identität des betreffenden Benutzers erlauben würden. Das erfindungsgemässe System und Verfahren zur Verbreitung von Bildobjekten bietet insbesondere Anbietern von Produkten und/oder Dienstleistungen eine Plattform für die automatisierte und benutzerspezifische Verbreitung von Werbung betreffend deren Produkten und/oder Dienstleistungen, wobei die Anbieter insbesondere auch mit statistischen Informationen darüber informiert werden, wie häufig und/oder wie lange, beispielsweise im Vergleich zu Bildobjekten anderer Anbieter, ihre Bildobjekte von Benutzern betrachtet werden. Falls die erwähnte Anonymität nicht gewünscht wird, können weitere Identifizierungsangaben von betreffenden Benutzern den Benutzerkenndaten zugeordnet abgespeichert werden, beispielsweise mit dem on-line gegebenen Einverständnis der betreffenden Benutzer. Interessierten Anbietern können auch statistische Informationen über die insgesamte Interessenslage der Benutzer des Systems zur Verbreitung von Bildobjekten zur Verfügung gestellt werden.

## Patentansprüche

1. System (1) zur Verbreitung von Bildobjekten, umfassend ein Kommunikationsnetz (3), mindestens eine mit diesem Kommunikationsnetz (3) verbundene Medienzentrale (2), eine mit der Medienzentrale (2) verbundene Benutzerinteressendatenbank (292), in welcher Benutzerinteressendatenbank (292) Benutzerinteressenprofile gespeichert sind, eine mit der Medienzentrale (2) verbundene Bildobjektdatenbank (291), in welcher Bildobjektdatenbank (291) die Bildobjekte und diesen Bildobjekten zugeordnete Bildobjektinformationen gespeichert sind, und ein oder mehrere mit diesem Kommunikationsnetz (3) verbindbare Kommunikationsendgeräte (4, 4', 4"), die jeweils über eine Anzeigeeinheit (41) verfügen, mittels welcher Anzeigeeinheit (41) die Bildobjekte einem Benutzer eines der Kommunikationsendgeräte (4) sichtbar gemacht werden, wobei in der Benutzerinteressendatenbank (292) den Benutzerinteressenprofilen zugeordnete Benutzerkenndaten gespeichert sind, und wobei die Medienzentrale (2) Mittel zur Ausführung folgender Funktionen umfasst: Entgegennahme von Benutzerkenndaten, die jeweils von einem der Kommunikationsendgeräte (4, 4', 4") über das Kommunikationsnetz (3) an die Medienzentrale (2) übertragen werden, Bestimmung des Benutzerinteressenprofils, das den entgegengenommenen Benutzerkenndaten zugeordnet ist, Bestimmung von Bildobjekten, denen Bildobjektinformationen zugeordnet sind, die mindestens eine Übereinstimmung mit Informationen des bestimmten Benutzerinteressenprofils aufweisen, und Übermittlung von mindestens einem der bestimmten Bildobjekte über das Kommunikationsnetz (3) an das betreffende Kommunikationsendgerät (4), von dem die entgegengenommenen Benutzerkenndaten übertragen wurden, **dadurch gekennzeichnet,**
**dass** die Kommunikationsendgeräte (4) jeweils ein Blickrichtungsbestimmungsmodul (42) zur Bestimmung der aktuellen Blickrichtung von mindestens einem Auge des Benutzers umfassen,
**dass** die Medienzentrale (2) ein Blickrichtungsauswertemodul (23) umfasst, welches auf Grund der aktuellen Blickrichtung, die jeweils von einem betreffenden Kommunikationsendgerät (4) über das Kommunikationsnetz (3) an die Medienzentrale (2) übertragen wird, und auf Grund von Videoobjekten und/oder Bildobjekten, die von der Medienzentrale (2) über das Kommunikationsnetz (3) an das betreffende Kommunikationsendgerät (4) übertragen werden, Bildobjekte bestimmt, die vom Benutzer des betreffenden Kommunikationsendgeräts (4) betrachtet werden, und
**dass** die Medienzentrale (2) ein Interessenbestimmungsmodul (25) umfasst, welches die Benutzerinteressenprofile auf Grund der Bildobjekt informationen, die jeweils den durch das Blickrichtungs auswertemodul (23) bestimmten Bild objekten zugeordnet sind, bestimmt und in der Benutzerinteressendatenbank (292) abspeichert.

2. System (1) gemäss Anspruch 1, **dadurch gekennzeichnet, dass** die Bildobjektinformationen Bestellnummern umfassen, dass die Benutzerkenndaten eines betreffenden Benutzers eine eindeutige Benutzeridentifizierung umfassen, und dass die Medienzentrale (2) ein Bestellmodul (22) umfasst, welches für eines der bestimmten Bildobjekte eine Bestellung einleitet, für welche Bestellung die diesem Bildobjekt zugeordnete Bestellnummer und die eindeutige Benutzeridentifizierung des betreffenden Benutzers verwendet werden.

3. System (1) gemäss einem der Ansprüche 1 oder 2, **dadurch gekennzeichnet, dass** die Medienzentrale (2) Mittel zur Einfügung der bestimmten Bildobjekte in Videoobjekte umfasst, welche Videoobjekte von der Medienzentrale (2) über das Kommunikationsnetz (3) an ein betreffendes Kommunikationsendgerät (4) übertragen werden, wo sie mittels der Anzeigeeinheit (41) dem Benutzer des betreffenden Kommunikationsendgeräts (4) sichtbar gemacht werden.

4. System (1) gemäss Anspruch 3, **dadurch gekennzeichnet, dass** es einen Videosynthesizer (27) zur Generierung der Videoobjekte aus gespeicherten Medienobjekten umfasst, wobei die Medienobjekte, denen Medienobjektinformationen zugeordnet sind, so bestimmt werden, dass die Medienobjektinformationen mindestens eine Übereinstimmung mit den Informationen des bestimmten Benutzerinteressenprofils aufweisen.

5. System (1) gemäss einem der Ansprüche 1 bis 4, **dadurch gekennzeichnet, dass** die Benutzerkenndaten biometrische Benutzermerkmale umfassen, und dass die Kommunikationsendgeräte (4) über Sensoren (43) zur Erfassung dieser biometrischen Benutzermerkmale verfügen.

6. System (1) gemäss Anspruch 5, **dadurch gekennzeichnet, dass** die biometrischen Benutzermerkmale Retinamuster umfassen, und dass die Sensoren (43) mikroelektromechanische Scanner zur Erfassung dieser Retinamuster umfassen.

7. System (1) gemäss einem der Ansprüche 1 bis 5, **dadurch gekennzeichnet, dass** die Anzeigeeinheit (41) eine virtuelle retinale Anzeigeeinheit umfasst, die Lichtsignale, die Videoobjekten und/oder Bildobjekten entsprechen, direkt auf die Retina des Benutzers projiziert.

8. System (1) gemäss einem der Ansprüche 1 bis 7, **dadurch gekennzeichnet, dass** das Kommunikationsnetz (3) ein Mobilfunknetz umfasst, und dass die Kommunikationsendgeräte (4, 4', 4") Mobilfunkgeräte umfassen.

9. System (1) gemäss einem der Ansprüche 1 bis 8, **dadurch gekennzeichnet, dass** es ein Bildobjekteingabemodul (24) zur Entgegennahme von Bildobjekten und zugeordneten Bildobjektinformationen, die jeweils Produkte und/oder Dienstleistungen betreffen und die von Anbietern von solchen Produkten und/oder Dienstleistungen über ein Kommunikationsnetz (5) eingegeben werden, und zur Abspeicherung der entgegengenommenen Bildobjekte und zugeordneten Bildobjektinformationen in der Bildobjektdatenbank (291) umfasst.

10. Verfahren zur Verbreitung von Bildobjekten, in welchem Verfahren die Bildobjekte aus einer mit einer Medienzentrale (2) verbundenen Bildobjektdatenbank (291) entnommen werden, in welcher Bildobjektdatenbank (291) Bildobjekte und diesen Bildobjekten zugeordnete Bildobjektinformationen gespeichert sind, und durch die Medienzentrale (2) über ein Kommunikationsnetz (3) an ein oder mehrere mit diesem Kommunikationsnetz (3) verbindbare Kommunikationsendgeräte (4, 4', 4") übertragen werden, und in welchem Verfahren die Bildobjekte einem Benutzer eines der Kommunikationsendgeräte (4) jeweils mittels einer Anzeigeeinheit (41) des Kommunikationsendgeräts (4) sichtbar gemacht werden, wobei durch die Medienzentrale (2) Benutzerkenndaten entgegengenommen werden, die jeweils von einem der Kommunikationsendgeräte (4) über das Kommunikationsnetz (3) an die Medienzentrale (2) übertragen werden, wobei durch die Medienzentrale (2) aus einer mit der Medienzentrale (2) verbundenen Benutzerinteressendatenbank (292), in welcher Benutzerinteressenprofile und diesen Benutzerinteressenprofilen zugeordnete Benutzerkenndaten gespeichert sind, jeweils das den entgegengenommenen Benutzerkenndaten zugeordnete Benutzerinteressenprofil bestimmt wird, wobei durch die Medienzentrale (2) aus der Bildobjektdatenbank (291) Bildobjekte bestimmt werden, denen Bildobjektinformationen zugeordnet sind, die mindestens eine Übereinstimmung mit Informationen des bestimmten Benutzerinteressenprofils aufweisen, und wobei durch die Medienzentrale (2) mindestens eines der bestimmten Bildobjekte über das Kommunikationsnetz (3) an das betreffende Kommunikationsendgerät (4) übermittelt wird, von dem die entgegengenommenen Benutzerkenndaten übertragen wurden, **dadurch gekennzeichnet,**
**dass** die aktuelle Blickrichtung von mindestens einem Auge des Benutzers jeweils durch ein Blickrichtungsbestimmungsmodul (43) des betreffenden Kommunikationsendgeräts (4) bestimmt wird,
**dass** die bestimmte aktuelle Blickrichtung jeweils vom betreffenden Kommunikationsendgerät (4) über das Kommunikationsnetz (3) an die Medienzentrale (2) übertragen wird,
**dass** durch ein Blickrichtungsauswertemodul (23) der Medienzentrale (2) auf Grund der bestimmten aktuellen Blickrichtung und auf Grund von Videoobjekten und/oder Bildobjekten, die von der Medienzentrale (2) über das Kommunikationsnetz (3) an das betreffende Kommunikationsendgerät (4) übertragen werden, Bildobjekte bestimmt, die vom Benutzer des betreffenden Kommunikationsendgeräts (4) betrachtet werden, und
**dass** durch ein Interessenbestimmungsmodul (25) der Medienzentrale (2) die Benutzerinteressenprofile auf Grund der Bildobjektinformationen, die jeweils den durch das Blickrichtungsauswertemodul (23) bestimmten Bildobjekten zugeordnet sind, bestimmt und in der Benutzerinteressendatenbank (292) abgespeichert werden.

11. Verfahren gemäss Anspruch 10, **dadurch gekennzeichnet, dass** die Bildobjektinformationen Bestellnummern umfassen, dass die Benutzerkenndaten eines betreffenden Benutzers eine eindeutige Benutzeridentifizierung umfassen, und dass durch ein Bestellmodul (22) der Medienzentrale (2) für eines der bestimmten Bildobjekte eine Bestellung eingeleitet wird, wobei für die Bestellung die diesem Bildobjekt zugeordnete Bestellnummer und die eindeutige Benutzeridentifizierung des betreffenden Benutzers verwendet werden.

12. Verfahren gemäss einem der Ansprüche 10 oder 11, **dadurch gekennzeichnet, dass** die bestimmten Bildobjekte durch die Medienzentrale (2) in Videoobjekte eingefügt werden, welche Videoobjekte von der Medienzentrale (2) über das Kommunikationsnetz (3) an ein betreffendes Kommunikationsendgerät (4) übertragen werden, wo sie mittels der Anzeigeeinheit (41) dem Benutzer des betreffenden Kommunikationsendgeräts (4) sichtbar gemacht werden.

13. Verfahren gemäss Anspruch 12, **dadurch gekennzeichnet, dass** die Videoobjekte durch einen Videosynthesizer (27) aus gespeicherten Medienobjekten generiert werden, wobei die Medienobjekte, denen Medienobjektinformationen zugeordnet sind, so bestimmt werden, dass die Medienobjektinformationen mindestens eine Übereinstimmung mit den Informationen des bestimmten Benutzerinteressenprofils aufweisen.

14. Verfahren gemäss einem der Ansprüche 10 bis 13, **dadurch gekennzeichnet, dass** in den Kommunikationsendgeräten (4) mittels Sensoren (43) biometrische Benutzermerkmale erfasst werden, welche biometrischen Benutzermerkmale in die Benutzerkenndaten eingefügt werden.

15. Verfahren gemäss Anspruch 14, **dadurch gekennzeichnet, dass** mittels mikroelektromechanischen Scannern Retinamuster erfasst werden, welche Retinamuster in die Benutzerkenndaten eingefügt werden.

16. Verfahren gemäss einem der Ansprüche 10 bis 15, **dadurch gekennzeichnet, dass** Lichtsignale, die Videoobjekten und/oder Bildobjekten entsprechen, mittels einer virtuellen retinalen Anzeigeeinheit (41) direkt auf die Retina des Benutzers projiziert werden.

17. Verfahren gemäss einem der Ansprüche 10 bis 16, **dadurch gekennzeichnet, dass** das Kommunikationsnetz (3) ein Mobilfunknetz umfasst, und dass die Kommunikationsendgeräte (4, 4', 4") Mobilfunkgeräte umfassen.

18. Verfahren gemäss einem der Ansprüche 10 bis 17, **dadurch gekennzeichnet, dass** Bildobjekte und zugeordnete Bildobjektinformationen, die jeweils Produkte und/oder Dienstleistungen betreffen und die von Anbietern von solchen Produkten und/oder Dienstleistungen über ein Kommunikationsnetz (5) eingegeben werden, in der Medienzentrale (2) entgegengenommen und in der Bildobjektdatenbank (291) abgespeichert werden.

## Claims

1. System (1) for distributing picture objects comprising a communications network (3), at least one media centre (2) connected to this communications network (3), a user interests database (292) connected to the media centre (2), in which user interests database (292) user interests profiles are stored, a picture object database (291) connected to the media centre (2), in which picture object database (291) the picture objects and picture object information assigned to these picture objects are stored, and one or more communications terminals (4, 4', 4") connectible to this communications network (3) which each have a display unit (41) by means of which display unit (41) the picture objects are made visible to a user of one of the communications terminals (4), user identification data assigned to the user interests profiles being stored in the user interests database (292), and the media centre (2) comprising means of carrying out the following functions: receiving user identification data which are transmitted in each case by one of the communications terminals (4, 4', 4") via the communications network (3) to the media centre (2), determining the user interests profile which is assigned to the received user identification data, determining picture objects to which picture object information is assigned having at least one correlation with information from the determined user interests profile, and transmitting at least one of the selected picture objects over the communications network (3) to the respective communications terminal (4) from which the received user identification data were transmitted, **characterised in that** the communications terminals (4) each comprise a direction-of-view-determining module (42) for determining the current direction of view of at least one eye of the user, **in that** the media centre (2) comprises a direction-of-view-evaluation module (23), which, on the basis of the current direction of view that is transmitted in each case by the respective communications terminal (4) over the communications network (3) to the media centre (2), and on the basis of video objects and/or picture objects transmitted from the media centre (2) over the communications network (3) to the respective communications terminal (4), determines picture objects being viewed by the user of the respective communications terminal (4), and **in that** the media centre (2) comprises an interests-determining module (25) which, on the basis of the picture object information in each case assigned to the picture objects selected through the direction-of-view-evaluation module (23), determines user interests profiles and stores them in the user interests database (292).

2. System (1) according to claim 1, **characterised in that** the picture object information includes order numbers, the user identification data for a respective user include an unambiguous user identification, and the media centre (2) includes an order module (22) which initiates an order for one of the selected picture objects, for which order the order number assigned to this picture object and the unambiguous user identification of the respective user are used.

3. System (1) according to one of the claims 1 or 2, **characterised in that** the media centre (2) comprises means for inserting the selected picture objects into video objects, which video objects are transmitted from the media centre (2) over the communications network (3) to a respective communications terminal (4), where they are made visible to the user of the respective communications terminal (4) by means of the display unit (41).

4. System (1) according to claim 3, **characterised in that** it includes a video synthesizer (27) for generating video objects from stored media objects, the media objects to which media object information is assigned being selected such that the media object information has at least one correlation with the information from the determined user interests profile.

5. System (1) according to one of the claims 1 to 4, **characterised in that** the user identification data include biometric user features, and the communications terminals (4) have sensors (43) for capturing these biometric user features.

6. System (1) according to claim 5, **characterised in that** the biometric user features comprise retinal patterns, and the sensors (43) comprise microelectromechanical scanners for capturing these retinal patterns.

7. System (1) according to one of the claims 1 to 5, **characterised in that** the display unit (41) comprises a virtual retinal display unit which projects light signals corresponding to video objects and/or picture objects directly onto the retina of the user.

8. System (1) according to one of the claims 1 to 7, **characterised in that** the communications network (3) comprises a mobile radio network, and the communications terminals (4, 4', 4") comprise mobile radio devices.

9. System (1) according to one of the claims 1 to 8, **characterised in that** it comprises a picture object input module (24) for receiving picture objects and assigned picture object information relating in each case to products and/or services and being entered via a communications network (5) by providers of such products and/or services, and for storing the received picture objects and assigned picture object information in the picture object database (291).

10. Method for distributing picture objects, in which method the picture objects are taken from a picture object database (291) connected to a media centre (2), in which picture object database (291) picture objects and picture object information assigned to these picture objects are stored and are transmitted by the media centre (2) over a communications network (3) to one or more communications terminals (4, 4', 4") connectible to this communications network (3), and in which method the picture objects are made visible to a user of one of the communications terminals (4) in each case by means of a display unit (41) of the communications terminal (4), user identification data being received by the media centre (2) which data are transmitted in each case over the communications network (3) to the media centre (2) by one of the communications terminals (4), the user interests profile assigned in each case to the received user identification data being determined by the media centre (2) from a user interests database (292) connected to the media centre (2), in which database user interests profiles and user identification data assigned to these user interests profiles are stored, picture objects to which picture object information is assigned having at least one correlation with information from the determined user interests profile being selected by the media centre (2) from the picture object database (291), and at least one of the selected picture objects being transmitted by the media centre (2) over the communications network (3) to the respective communications terminal (4) from which the received user identification data were transmitted, **characterised in that** the current direction of view of at least one eye of the user is determined in each case by a direction-of-view-determining module (43) of the respective communications terminal (4), the determined current direction of view is transmitted in each case by the respective communications terminal (4) over the communications network (3) to the media centre (2), and picture objects which are viewed by the user of the respective communications terminal (4) are determined by a direction-of-view-evaluation module (23) of the media centre (2) on the basis of the determined current direction of view and on the basis of video objects and/or picture objects which have been transmitted from the media centre (2) over the communications network (3) to the respective communications terminal (4, and **in that** user interests profiles are determined by an interests-determining module (25) of the media centre (2) on the basis of picture object information in each case assigned to the picture objects selected through the direction-of-view-evaluation module (23) and are stored in the user interests database (292).

11. Method according to claim 10, **characterised in that** the picture object information includes order numbers, the user identification data for a respective user includes an unambiguous user identification, and an order is initiated by an order module (22) of the media centre (2) for one of the selected picture objects, the order number assigned to this picture object and the unambiguous user identification of the respective user being used for the order.

12. Method according to one of the claims 10 or 11, **characterised in that** the selected picture objects are inserted in video objects by the media centre (2), which video objects are transmitted from the media centre (2) over the communications network (3) to a respective communications terminal (4), where they are made visible to the user of the respective communications terminal (4) by means of the display unit (41).

13. Method according to claim 12, **characterised in that** the video objects are generated by a video synthesizer (27) from stored media objects, the media objects, to which media object information is assigned, being selected such that the media object information has at least one correlation with the information from the determined user interests profile.

14. Method according to one of the claims 10 to 13, **characterised in that** biometric user features are captured in the communications terminals (4) by means of sensors (43), which biometric user features are inserted into the user identification data.

15. Method according to claim 14, **characterised in that** retinal patterns are captured by means of microelectromechanical scanners, which retinal patterns are inserted into the user identification data.

16. Method according to one of the claims 10 to 15, **characterised in that** light signals corresponding to video objects and/or picture objects are projected directly onto the retina of the user by means of a virtual retinal display unit (41).

17. Method according to one of the claims 10 to 16, **characterised in that** the communications network (3) comprises a mobile radio network and the communications terminals (4, 4', 4") comprise mobile radio devices.

18. Method according to one of the claims 10 to 17, **characterised in that** picture objects and associated picture object information relating in each case to products and/or services and entered over a communications network (5) by providers of such products and/or services are received in the media centre (2) and are stored in the picture object database (291).

## Revendications

1. Système (1) pour la diffusion d'objets d'image, comprenant un réseau de communication (3), au moins une centrale médiatique (2) reliée à ce réseau de communication (3), une banque de données (292) d'intérêts d'utilisateurs reliée à la centrale médiatique (2), banque de données (292) d'intérêts d'utilisateurs dans laquelle sont stockés des profils d'intérêts d'utilisateurs, comprenant une banque de données d'objets d'image (291) reliée à la centrale médiatique (2), banque de données d'objets d'image (291) dans laquelle sont stockées les objets d'image et les informations d'objets d'image associées à ces objets d'image, et un ou plusieurs terminaux de communication (4, 4', 4") reliables à ce réseau de communication (3), qui disposent respectivement d'une unité d'affichage (41), unité d'affichage (41) au moyen de laquelle les objets images peuvent être rendus visibles à un utilisateur d'un des terminaux de communication (4), des données caractéristiques d'utilisateurs associées aux profils d'intérêts d'utilisateurs étant stockées dans la banque de données d'intérêts d'utilisateurs (292), et la centrale médiatique (2) comprenant des moyens pour l'exécution des fonctions suivantes: réception de données caractéristiques d'utilisateurs, qui sont transmises à la centrale médiatique (2) par le biais du réseau de communication (3) respectivement depuis l'un des terminaux de communication (4,4,', 4"), détermination du profil d'intérêts d'utilisateurs qui est associé aux données caractéristiques d'utilisateurs recueillies, détermination d'objets images qui sont associés aux informations d'objets images qui présentent au moins une concordance avec des informations du profil d'intérêts d'utilisateurs défini et transmission d'au moins l'un des objets images définis par le réseau de communication (3) au terminal de communication concerné (4) depuis lequel ont été transmises les données caractéristiques d'utilisateurs recueillies, **caractérisé en ce que** les terminaux de communication (4) comprennent respectivement un module de détermination de sens du regard (42) pour la détermination de la direction actuelle du regard d'au moins un oeil de l'utilisateur, **en ce que** la centrale médiatique (2) comprend un module d'analyse de direction du regard (23), module qui, sur la base de la direction du regard actuelle, à été transmis respectivement par un terminal considéré de communication (4) via le réseau de communication (3) à la centrale médiatique (2) et qui, sur la base d'objets vidéo et/ou d'objets images, qui sont transmis par le réseau de communication (3) de la centrale médiatique (2) au terminal de communication (4) considéré, définit des objets images qui sont observés par l'utilisateur du terminal de communication considéré (4), et **en ce que** la centrale médiatique (2) comprend un module de détermination d'intérêts (25) qui définit sur la base des informations d'objets images qui sont associées respectivement aux objets images définis par le module d'analyse de direction de regard (23) des profils d'intérêts d'utilisateurs et les stocke dans la banque de données d'intérêts d'utilisateurs (292).

2. Système (1) selon la revendication 1, **caractérisé en ce que** les informations d'objets images comprennent des numéros de commande, **en ce que** les données caractéristiques d'un utilisateur considéré comprennent une identification claire d'utilisateur, et **en ce que** la centrale médiatique (2) comporte un module de commande (22) qui déclenche une commande pour l'un des objets images, commande pour laquelle le numéro de commande associé à l'objet image et l'identification claire de l'utilisateur considéré sont utilisés.

3. Système (1) selon l'une des revendications 1 ou 2, **caractérisé en ce que** la centrale médiatique (2) comprend des moyens d'insertion des objets images définis dans des objets vidéo, objets vidéo qui sont transmis de la centrale médiatique (2) par le réseau de communication (3) à un terminal de communication considéré (4), ou elles sont rendues visibles au moyen de l'unité d'affichage (41) à l'utilisateur du terminal de communication considéré (4).

4. Système (1) selon la revendication 3, **caractérisé en ce qu'**il comprend un synthétiseur vidéo (27) pour la génération des objets vidéo à partir des objets médiatiques stockés, les objets médiatiques auxquels sont associées des informations étant définis de sorte que les informations d'objets médiatiques présentent au moins une concordance avec les informations du profil défini d'intérêts d'utilisateurs.

5. Système (1) selon l'une des revendications 1 à 4, **caractérisé en ce que** les données caractéristiques d'utilisateur comprennent des caractéristiques biométriques d'utilisateur et **en ce que** les terminaux de communication (4) disposent de capteurs (43) pour la détection de ces caractéristiques biométriques d'utilisateur.

6. Système (1) selon la revendication 5, **caractérisé en ce que** les caractéristiques biométriques d'utilisateur comprennent un modèle de rétine et **en ce que** les capteurs (43) comprennent des scanners micro-électromécaniques pour la détection de ces modèles de rétines.

7. Système (1) selon l'une des revendications 1 à 5, **caractérisé en ce que** l'unité d'affichage (41) comprend une unité d'affichage virtuel rétinien, qui projette directement sur la rétine de l'utilisateur des signaux lumineux qui correspondent à des objets video et/ou à des objets images.

8. Système (1) selon l'une des revendications 1 à 7, **caractérisé en ce que** le réseau de communication (3) comprend un réseau mobile de radiocommunication et **en ce que** las terminaux de communication (4, 4', 4") comprennent des périphériques mobiles de radiocommunication.

9. Système (1) selon l'une des revendications 1 à 8, **caractérisé en ce qu'**il comprend un module de saisie d'objet image (24) pour la réception d'objets images et d'informations d'objets images associés, qui concernent respectivement des produits et/ou des services et qui sont entrés par des prestataires de ces produits et/ou services par un réseau de communication (5) et pour la mémorisation des objets images recueillis et des informations associées d'objets image dans la banque de données d'objets images (291).

10. Procédé pour la diffusion d'objets images, procédé dans lequel les objets images sont prélevés d'une banque de données d'objets images (291) reliée à une centrale médiatique (2), banque de données d'objets d'image (291) dans laquelle sont stockés des objets images et des informations associées à ces objets images et les objets images sont transmis par la centrale médiatique (2) via un réseau de communication (3) à un ou plusieurs terminaux de communication (4, 4', 4") reliables à ce réseau de communication (3) et procédé dans lequel les objets images sont rendus visibles à un utilisateur d'un des terminaux de communication (4) respectivement au moyen d'une unité d'affichage (41) du terminal de communication (4), la centrale médiatique (2) réceptionnant des données caractéristiques d'utilisateur qui sont respectivement transmises de l'un des terminaux de communication (4) à la centrale médiatique (2) par le biais du réseau de communication (3), la centrale médiatique (2) définissant à partir d'une banque de données (292) d'intérêts d'utilisateurs reliée à la centrale médiatique (2), dans laquelle sont stockés des profils d'intérêts d'utilisateurs et des données caractéristiques d'utilisateurs associées à ces profils d'intérêts d'utilisateurs, respectivement le profil d'intérêt d'utilisateur associé aux données caractéristiques d'utilisateurs recueillies, la centrale médiatique (2) définissant à partir de la banque de données d'objets images (291) des objets images auxquels sont associées des informations d'objets images qui présentent au moins une concordance avec des informations du profil d'intérêt d'utilisateur défini, la centrale médiatique (2) transmettant au moins l'un des objets images définis par le réseau de communication (3) au terminal de communication concerne (4) depuis lequel ont été transférées les données caractéristiques d'utilisateurs recueillies, **caractérisé en ce que** la direction actuelle du regard d'au moins un oeil de l'utilisateur est définie respectivement par un module de détermination de direction de regard (43) du terminal de communication correspondant (4), **en ce que** la direction actuelle de regard définie est transférée respectivement du terminal considéré de communication (4) à la centrale médiatique (2) par l'intermédiaire d'un réseau de communication (3), **en ce qu'**un module d'analyse de direction de regard (23) de la centrale médiatique (2) détermine sur la base de la direction actuelle définie et sur la base d'objets vidéo et/ou d'objets images, qui sont transmis de la centrale médiatique (2) au terminal de communication considéré (4) par l'intermédiaire du réseau de communication (3), des objets images qui sont observés par l'utilisateur du terminal de communication considéré (4), et **en ce que** par un module de détermination d'intérêts (25) de la centrale médiatique (2) sur la base des informations d'objets images qui sont associées respectivement aux objets images définis par le module d'analyse de direction de regard (23) des profils d'intérêts d'utilisateurs sont définis et sont stockés dans la banque de données d'intérêts d'utilisateurs (292).

11. Procédé selon la revendication 10, **caractérisé en ce que** les informations d'objets images comprennent des numéros de commande, **en ce que** les données caractéristiques d'un utilisateur considéré comprennent une identification claire d'utilisateur et **en ce que** la centrale médiatique (2) comporte un module de commande (22) qui déclenche une commande pour l'un des objets images, commande pour laquelle le numéro de commande associé à l'objet image et l'identification claire de l'utilisateur considéré sont utilisés.

12. Procédé selon l'une des revendications 10 ou 11, **caractérisé en ce que** les objets images définis sont insérés par la centrale médiatique (2) dans des objets vidéo, objets vidéo qui sont transmis de la centrale médiatique (2) à un terminal de communication considéré (4) par l'intermédiaire du réseau de communication (3), où ils sont rendus visibles à l'utilisateur du terminal de communication considéré (4) au moyen de l'unité d'affichage (41).

13. Procédé selon la revendication 12, **caractérisé en ce que** les objets vidéos sont générés par un synthétiseur vidéo (27) à partir d'objets médiatiques stockés, les objets médiatiques, auxquels sont associées des informations d'objets médiatiques, étant définis de sorte que les informations d'objets médiatiques présentent au moins une concordance avec les informations du profil défini d'intérêt utilisateur.

14. Procédé selon l'une des revendications 10 à 13, **caractérisé en ce que** des capteurs (43) se trouvant dans les terminaux de communication (4) détectent des caractéristiques biométriques d'utilisateurs, caractéristiques biométriques d'utilisateurs qui sont insérées dans les données caractéristiques d'utilisateurs.

15. Procédé selon la revendication 14, **caractérisé en ce que** des modèles de rétine sont détectés au moyen de scanners micro-électromécaniques, modèles de rétines qui sont insérés dans les données caractéristiques d'utilisateurs.

16. Procédé selon l'une des revendications 10 à 15, **caractérisé en ce que** des signaux lumineux qui correspondent aux objets vidéo et/ou aux objets images sont projetés directement sur la rétine de l'utilisateur au moyen d'une unité d'affichage rétinien virtuel (41).

17. Procédé selon l'une des revendications 10 à 16, **caractérisé en ce que** le réseau de communication (3) comprend un réseau radio mobile et **en ce que** les terminaux de communication (4, 4', 4") comprennent des périphériques radio mobiles.

18. Procédé selon l'une des revendications 10 à 17, **caractérisé en ce que** des objets images et des informations d'objets images associées, qui concernent respectivement des produits et/ou services et qui sont entrées par les prestataires de ces produits et/ou services par l'intermédiaire d'un réseau de communication (5), sont réceptionnés dans la centrale médiatique (2) et sont mémorisés dans la banque de données d'objets images (291).
